# EUROPÄISCHE PATENTSCHRIFT

(11) **EP 1 466 765 B1**
(45) Veröffentlichungstag und Bekanntmachung des Hinweises auf die Patenterteilung: **08.08.2007**
(21) Anmeldenummer: 04003719.4
(22) Anmeldetag: 19.02.2004
(51) Int. Cl.: B60H 1/00

(54) **Bausatz zur Herstellung einer Fahrzeugheizungsbedieneinheit**
Modular control unit for automobile heating
Unité de commande modulaire pour chauffage pour automobile

(30) Priorität: 08.04.2003 DE 10315974
(43) Veröffentlichungstag der Anmeldung: 13.10.2004
(73) Patentinhaber: Behr-Hella Thermocontrol GmbH, 70190 Stuttgart (DE)
(72) Erfinder: Fust, Winfried, 59557 Lippstadt (DE); Vogt, Frank, 33165 Lichtenau-Husen (DE)
(74) Vertreter: Hilleringmann, Jochen

(56) Entgegenhaltungen:
- EP-A- 1 228 908
- DE-A1- 19 519 113
- US-B1- 6 378 388

## Beschreibung

Die Erfindung bezieht sich auf einen Bausatz zur Herstellung einer Fahrzeugheizungsbedieneinheit.

Fahrzeugheizungsbedieneinheiten ermöglichen die manuelle Betätigung eines Fahrzeugheizungssystems. Derartige Fahrzeugheizungsbedieneinheiten umfassen normalerweise ein Gehäuse, in dem ein Getriebe mit einer Antriebs- und einer Abtriebswelle aufgenommen ist. An der Vorderseite des Gehäuses befindet sich ein Drehknopf, der an der Antriebswelle befestigt ist. Die Abtriebswelle des Getriebes ist beispielsweise über eine flexible Welle mit einem Betätigungsmechanismus (zum Beispiel ein Getriebe) einer Luftverteiler- und/oder Mischklappe eines Fahrzeugheizungssystems gekoppelt. Wird nun an dem Drehknopf manuell eine Drehbewegung eingeleitet, so wird diese Drehbewegung über das Getriebe und die flexible Welle auf den Betätigungsmechanismus der Luftverteiler- und oder Mischklappe übertragen. Auf diese Weise kann die Position einer Klappe (Luftverteiler- oder Mischklappe) des Fahrzeugheizungssystems verändert und die Luftverteilung beziehungsweise die Fahrzeuginnentemperatur eingestellt werden.

DE-A- 195 19 113 zeigt eine Fahrzeugheizungsbedieneinheit mit mehreren Modulen zur Reglung der Temperatur des Innenraums, zur Gewährleistung des Strömens oder des Stillstands der klimatisierten Luft und zur Steuerung der Geschwindigkeit des Luftpulsators der Heizungs- und Klimaanlage.

Die Getriebeübersetzung sowie die Anordnung der Antriebs- und Abtriebswelle relativ zueinander werden den Einbauraumverhältnissen des Fahrzeuges entsprechend bereits bei der Herstellung der Fahrzeugheizungsbedieneinheit festgelegt und können anschließend nicht mehr verändert werden.

Es ist üblich, dass mehrere Fahrzeuge eines Fahrzeugherstellers soweit wie möglich mit den gleichen Systemkomponenten ausgestattet sind (Plattformgedanke). Dabei muss die Einbaulage der hinter dem Armaturenbrett angeordneten Bauteile an den zur Verfügung stehenden Einbauraum angepasst werden, der je nach Fahrzeugtyp variiert. Aus konstruktionstechnischen Gründen ist es somit häufig erforderlich, dass die Fahrzeugheizungsbedieneinheiten abhängig von Typ und Modell an die unterschiedlichen Anforderungen hinsichtlich der Getriebeübersetzung und/oder der Anordnung der Antriebs- und Abtriebswelle relativ zueinander angepasst werden müssen.

Wie bereits zuvor erwähnt, ist jedoch eine solche nachträgliche Anpassung der Getriebeübersetzung und der relativen Anordnung der Antriebs- und Abtriebswelle bei bekannten Fahrzeugheizungsbedieneinheiten nicht möglich, da diese bereits bei der Herstellung unabänderbar festgelegt werden. Aus Sicht der Produktion und insbesondere hinsichtlich der Kosten wäre es allerdings wünschenswert, wenn gleiche beziehungsweise im wesentlichen gleiche oder zumindest in Teilen gleiche Fahrzeugheizungsbedieneinheiten für die unterschiedlichen Fahrzeugtypen und Sondermodelle verwendet werden könnten. Eine aus mehreren Modulen aufgebaute Fahrzeugheizungsbedieneinheit ist z.B. aus DE-A-195 19 113 bekannt.

Es ist somit eine Aufgabe der vorliegenden Erfindung, eine Fahrzeugheizungsbedieneinheit zu schaffen, die an unterschiedliche Anforderungen an die Getriebeübersetzung sowie an die Anordnung der Antriebs- und Abtriebswelle relativ zueinander angepasst werden kann, so dass im wesentlichen gleiche oder zumindest in Teilen gleiche Fahrzeugheizungsbedieneinheiten für unterschiedliche Fahrzeugtypen und/oder Sondermodelle verwendet werden können.

Gemäss der vorliegenden Erfindung wird zur Lösung dieser Aufgabe ein Bausatz zur Herstellung einer Fahrzeugheizungsbedieneinheit vorgeschlagen, der versehen ist mit
- einem ersten Modul, das ein erstes Gehäuseteil und ein Antriebszahnrad mit einer drehbar an dem ersten Gehäuseteil gelagerten Welle aufweist, welche die Antriebswelle bildet, wobei im ersten Gehäuseteil eine erste Öffnung vorgesehen ist, innerhalb derer das Antriebszahnrad zumindest teilweise frei liegt, und
- mehreren zweiten Modulen, die jeweils ein zweites Gehäuseteil und ein Abtriebszahnrad mit einer drehbar in dem zweiten Gehäuseteil gelagerten Welle aufweisen, welche die Abtriebswelle bildet, wobei in dem zweiten Gehäuseteil eine zweite Öffnung vorgesehen ist, innerhalb derer das Abtriebszahnrad zumindest teilweise frei liegt,
- wobei sich die zweiten Module hinsichtlich der Ausbildung des Abtriebszahnrades und/oder hinsichtlich der Ausrichtung der Abtriebswelle und der Ausbildung des zweiten Gehäuseteils unterscheiden, und
- wobei jedes der zweiten Module mit dem ersten Modul zur Bildung der Fahrzeugheizungsbedieneinheit mit unterschiedlicher Ausrichtung der Abtriebswelle zur Antriebswelle hinsichtlich des Höhenwinkels, den die Antriebswelle mit der Abtriebswelle bildet, und/oder hinsichtlich des Seitenwinkels, um den die Abtriebswelle gegenüber der Antriebswelle um diese verdreht ist, zusammensetzbar ist.

Durch entsprechende Paarung des ersten Moduls mit einem der zweiten Module ist die Abtriebsrichtung der Fahrzeugbedieneinheit, also sowohl der Höhenals auch der Seitenwinkel, die An- und Abtriebswelle miteinander bilden, wählbar. Zur Änderung des Seitenwinkels müssen das erste und das zweite Modul lediglich gegeneinander verdreht werden, so dass es nicht erforderlich ist, das zweite Modul auszutauschen.

Der Höhenwinkel kann z.B. durch entsprechende Ausrichtung der Abtriebswelle in dem zweiten Gehäuseteil relativ zur Antriebswelle des ersten Gehäuseteils verändert werden. Dazu ist es erforderlich, dass das zweite Gehäuseteil an die geänderte Anordnung der Abtriebswelle angepasst ist. Ferner ist die Ausbildung des zweiten Zahnrades an den geänderten Höhenwinkel derart anzupassen, dass das zweite Zahnrad ordnungsgemäß mit dem ersten Zahnrad kämmen kann. An dieser Stelle sei darauf hingewiesen, dass neben der Anpassung des zweiten Zahnrades an eine Änderung des Höhenwinkels auch eine Anpassung des ersten Zahnrades dann erfolgen sollte, wenn ein gewisser Höhenwinkeländerungsbereich überschritten wird, da sonst ein ordnungsgemäßes Kämmen nicht mehr gewährleistet werden kann. Es ist daher bevorzugt, ab einer Änderung des Höhenwinkels von mehr als 30°, besser noch mehr als 20°, am besten mehr als 10°, neben dem zweiten Zahnrad auch das erste Zahnrad an den geänderten Höhenwinkel anzupassen. Das erste Gehäuseteil hingegen bleibt dabei unverändert. Sollten derart große Änderungen des Höhenwinkels vorgesehen sein, so ist bevorzugt, dass das erste Zahnrad austauschbar an dem ersten Gehäuseteil gehalten ist. Vorzugsweise sind das Antriebs- und Abtriebszahnrad jeweils als Kegelzahnräder ausgebildet, wobei beide als Außenkegelzahnräder oder eines als Außen- und das andere als Innenkegelzahnrad ausgebildet sein können/kann.

An dieser Stelle sei darauf hingewiesen, dass zwischen An- und Abtriebswelle der Fahrzeugheizungsbedieneinheit noch weitere Getriebekomponenten, wie beispielsweise weitere Zahnräder vorgesehen werden können, worauf nachfolgend jedoch nicht näher eingegangen werden soll.

Der Bausatz zur Herstellung einer Fahrzeugheizungsbedieneinheit gemäss der vorliegenden Erfindung weist infolge seines modularen Aufbaus gegenüber herkömmlichen Fahrzeugheizungsbedieneinheiten den Vorteil auf, dass durch eine entsprechende Paarung des ersten Moduls mit einem der zweiten Module die Anordnung der Antriebs- und Abtriebswelle relativ zueinander bei der Montage der Fahrzeugheizungsbedieneinheit eingestellt und an die individuellen Anforderungen unterschiedlicher Fahrzeugtypen beziehungsweise Sondermodelle angepasst werden können. Dabei werden zumindest für das erste Modul Gleichteile eingesetzt, was zu einer Senkung der Herstellungskosten führt. Ferner werden auch die Entwicklungskosten für Fahrzeugheizungsbedieneinheiten reduziert, da die Verwendung von Gleichteilen die Auslegung der Einheit sowie die Herstellung von Prototypen vereinfacht und somit auch die Entwicklungszeit verkürzt. Schließlich erfordert die Herstellung von Fahrzeugheizungsbedieneinheiten unter Einsatz von Gleichteilen einen geringeren logistischen Aufwand.

Vorzugsweise umfassen das erste und/oder jedes der zweiten Gehäuseteile, die Antriebs- und/oder die Abtriebswelle und/oder das Antriebs- und/oder das Abtriebszahnrad Kunststoffmaterial auf. Durch den Einsatz von Kunststoff wird ein geringes Gewicht der Fahrzeugheizungsbedieneinheit erzielt. Ferner können die einzelnen Bauteile einfach und preiswert beispielsweise mittels Spritzguss hergestellt werden. Bevorzugt weisen jedoch alle der zuvor genannten Bauteile Kunststoff auf, wobei wenigstens zwei unterschiedliche Kunststoffmaterialien vorgesehen sind. Diese zwei Kunststoffmaterialien werden bevorzugt hinsichtlich tribologischer Aspekte der Berührungspunkte von Antriebswelle und erstem Gehäuseteil, von Antriebszahnrad und Abtriebszahnrad sowie von Abtriebswelle und zweitem Gehäuseteil miteinander kombiniert, um auf diese Weise eine schmiermittellose Lagerung der bewegten Bauteile zu erzeugen. Vorzugsweise werden dabei Acrylnitril-Butadien-Styrol (ABS) und/oder Polycarbonat (PC) und/oder Polyamid (PA), insbesondere Polyamid 6 (PA6), und/oder Polyoxymethylen (POM) als Kunststoffmaterialien verwendet.

Ferner ist bevorzugt vorgesehen, dass jeweils die Antriebswelle und das Antriebszahnrad sowie die Abtriebswelle und das Abtriebszahnrad einteilig ausgebildet sind, um auf diese Weise die Anzahl von Bauteilen der Fahrzeugheizungsbedieneinheit und somit die Fertigungskosten und den Logistik-Aufwand zu reduzieren.

Weiterhin ist es vorteilhaft, wenn die Antriebswelle zur Aufnahme bzw. Befestigung eines Betätigungselementes vorgesehen ist. Bei dem Betätigungselement kann es sich beispielsweise um einen an dem Armaturenbrett des Fahrzeugs angeordneten Drehknopf handeln, der zur Betätigung der Fahrzeugheizungsbedieneinheit gemäss der vorliegenden Erfindung verwendet wird.

Die Abtriebswelle ist hingegen vorzugsweise zur Aufnahme bzw. zur Befestigung einer flexiblen oder starren Welle vorgesehen, um die von der Antriebswelle auf die Abtriebswelle der Fahrzeugheizungsbedieneinheit übertragene Drehbewegung an die anzusteuernde Einheit, beispielsweise an eine Misch-, Umluft- oder Luftverteilerklappe, weiterzuleiten. Anstelle der Welle können auch andere Elemente verwendet werden, die zur Übertragung von Drehbewegungen geeignet sind.

Vorzugsweise ist das Antriebszahnrad ein Kegelzahnrad mit einer Innenverzahnung und das Abtriebszahnrad ein Kegelzahnrad mit einer Außenverzahnung. Aus der Kombination von Kegelzahnrad mit Innen- und Außenverzahnung resultiert eine größere Profilüberdeckung als beziehungsweise bei einer Stirnverzahnung, da gleichzeitig mehr Zähne miteinander in Eingriff sind. Somit lassen sich bei gleichen Zahngrößen größere Kräfte übertragen.

Zur axialen Sicherung der Abtriebswelle im zweiten Gehäuseteil wird bevorzugt eine Rastverbindung verwendet. Rastverbindungen weisen den Vorteil auf, dass sie ohne weitere Befestigungsmittel schnell und einfach montiert werden können, was sich wiederum positiv auf die Herstellungskosten der Fahrzeugheizungsbedieneinheit der vorliegenden Erfindung auswirkt. Bei der Rastverbindung handelt es sich bevorzugt um eine Kombination aus einer Umfangsnut an den zweiten Gehäuseteilen und einem Rastvorsprung an den Abtriebswellen Oder um eine Kombination aus einer Umfangsnut an den Abtriebswellen und einem Rastvorsprung an den zweiten Gehäuseteilen. Dabei ist der Rastvorsprung vorzugsweise elastisch ausgebildet und taucht schnappend in die Umfangsnut ein.

Vorzugsweise stützen sich die Stirnseiten des Antriebszahnrads zur axialen Sicherung des Antriebszahnrades zumindest teilweise gegen das erste Gehäuseteil, wobei ausreichend Spiel für die Drehbewegung des Antriebszahnrads innerhalb des ersten Gehäuseteils verbleibt. Ferner ist bevorzugt, dass sich ein erster Abschnitt der Antriebswelle zur radialen Sicherung des Antriebszahnrads in eine im wesentlichen kreisrunde Öffnung erstreckt, die in dem ersten Gehäuseteil ausgebildet ist. Der Außendurchmesser des ersten Abschnitts ist dabei geringfügig kleiner als der Durchmesser der Öffnung, um ein möglichst geringes radiales Spiel zu erzeugen, ohne die Drehbewegung des Antriebszahnrads einzuschränken. Weiterhin ist bevorzugt, dass die Antriebswelle neben dem ersten Abschnitt einen zweiten Abschnitt aufweist, dessen Außendurchmesser größer als der Durchmesser der Öffnung ist, so dass die Antriebswelle im Übergangsbereich vom ersten zum zweiten Abschnitt teilweise auf dem ersten Gehäuseteil aufliegt. Die ringförmige Auflagefläche, die durch den Übergangsbereich erzeugt wird, bildet dabei einen axialen Anschlag, der eine weitere axiale Fixierung der Antriebswelle in der Öffnung ermöglicht.

Ferner ist es zweckmäßig, dass eine Führungsnut zum leichteren Positionieren des Antriebszahnrades in dem ersten Gehäuseteil vorgesehen ist, in welcher der erste Abschnitt der Antriebswelle während der Montage in Richtung der Öffnung geführt ist, was nachfolgend anhand eines Ausführungsbeispiels unter Bezugnahme auf die Zeichnung genauer beschrieben ist.

Es sollte klar sein, dass sich das Abtriebszahnrad zumindest teilweise durch die erste Öffnung des ersten Gehäuseteils sowie durch die zweite Öffnung des zweiten Gehäuseteils erstreckt, um mit dem Antriebszahnrad in Eingriff zu kommen (umgekehrt kann sich auch das Antriebszahnrad durch beide Öffnungen erstrecken). Dabei ist die Verzahnung des Antriebszahnrades innerhalb der ersten Öffnung vorzugsweise vollständig freigelegt. Auf diese Weise kann die Position des Eingriffes der beiden Zahnräder entlang der Verzahnung des Antriebszahnrades bei der Paarung des zweiten Moduls mit dem ersten Modul frei gewählt werden. Somit kann die zweite Drehachse, wenn die ersten und zweiten Drehachsen winklig zueinander angeordnet sind, rotationssymmetrisch zur ersten Drehachse jede beliebige Position und somit jeden beliebigen Seitenwinkel einnehmen und in der gewählten Position mit Hilfe von geeigneten Befestigungsmitteln fixiert werden, was in der nachfolgenden Beschreibung unter Bezugnahme auf die Zeichnung noch genauer beschrieben ist.

Es ist jedoch auch möglich, dass anstelle der die gesamte Verzahnung des Antriebszahnrades freilegenden Öffnung mehrere erste Module vorgesehen sind, die sich hinsichtlich der Position und/oder der Größe ihrer ersten Öffnung unterscheiden und die jeweils nur einen Teilbereich der Verzahnung des Antriebszahnrades freilegen.

Nachfolgend wird eine bevorzugte Ausführungsform der Fahrzeugheizungsbedieneinheit gemäss der vorliegenden Erfindung unter Bezugnahme auf die beiliegende Zeichnung genauer beschrieben. Im einzelnen zeigen:
- Fig. 1: eine Vorderansicht einer Fahrzeugheizungsbedieneinheit,
- Fig. 2: eine Querschnittsansicht entlang der Linie II-II der Fig. 1, die eine bevorzugte Ausführungsform der Fahrzeugheizungsbedieneinheit gemäss der vorliegenden Erfindung zeigt,
- Fig. 3: eine perspektivische Explosionsansicht eines zweiten Moduls der in Fig. 2 gezeigten Ausführungsform der Fahrzeugheizungsbedieneinheit gemäss der vorliegenden Erfindung, und
- Fig. 4: eine Querschnittansicht entlang der Linie IV-IV in Fig. 2.

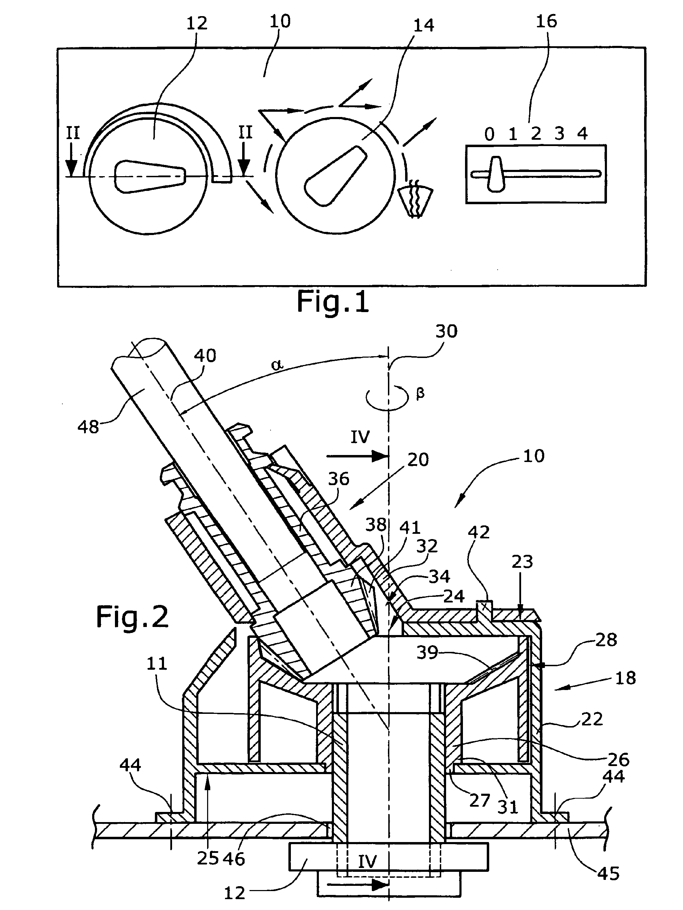

Fig. 1 ist eine Vorderansicht einer Fahrzeugheizungsbedieneinheit 10 einer Fahrzeugheizungsanlage, an der zwei Bedienelemente in Form von Drehknöpfen 12, 14 sowie ein verschiebbares Bedienelement 15 angeordnet sind. Mit Hilfe des Drehknopfes 12 kann der Fahrzeuginsasse die gewünschte Fahrzeuginnentemperatur einstellen, während der Drehknopf 14 zur Auswahl der Luftverteilung innerhalb des Fahrzeuges und das verschiebbare Bedienelement 16 zum Einstellen der Luftmenge dient.

Fig. 2 ist eine Querschnittansicht entlang der Linie II-II der Fig. 1 und zeigt eine erste Ausführungsform der Fahrzeugheizungsbedieneinheit 10 gemäss der vorliegenden Erfindung, die über einen Drehzapfen 11 mit dem ersten Drehknopf 12 verbunden ist. Die Fahrzeugheizungsbedieneinheit 10 umfasst ein erstes Modul 18 und ein zweites Modul 20. Das erste Modul 18 weist ein erstes Gehäuseteil 22 mit einer Oberseite, einer in der Oberseite 23 ausgebildeten ersten Öffnung 24 und einer Unterseite 25, eine hohle Antriebswelle 26 und ein innenverzahntes Antriebskegelzahnrad 28 auf, wobei Antriebswelle 26 und Antriebskegelzahnrad 28 einteilig miteinander ausgebildet sind.

Das Antriebskegelzahnrad 28 liegt jeweils an seinen Stirnseiten an dem ersten Gehäuseteil 22 an und ist auf diese Weise axial in dem ersten Gehäuseteil 22 fixiert. Dabei ist ausreichend Spiel zwischen den Stirnseiten des Antriebskegelzahnrades 28 und dem ersten Gehäuseteil 22 vorgesehen, so dass eine Drehbewegung des Antriebskegelzahnrads 28 innerhalb des ersten Gehäuseteils 22 nicht behindert wird. Ferner erstreckt sich ein erster Abschnitt 27 der Antriebswelle 26 in eine in dem ersten Gehäuseteil 22 ausgebildete kreisrunde Öffnung 29, wobei der Außendurchmesser des ersten Abschnitts 27 geringfügig kleiner als der Durchmesser der Öffnung 29 ist. Auf diese Weise ist die Antriebswelle 26 radial in dem ersten Gehäuseteil 22 und um eine Drehachse 30 drehbar fixiert. An den ersten Abschnitt 27 der Antriebswelle 26 schließt sich ein zweiter Abschnitt 31 an, dessen Außendurchmesser größer als der Durchmesser der Öffnung 29 ist. Dabei liegt die im Übergangsbereich zwischen dem ersten und dem zweiten Abschnitt ausgebildete ringförmige Fläche an dem ersten Gehäuseteil 22 an und bildet einen axialen Anschlag, der als weitere axiale Fixierung der Antriebswelle 26 in dem ersten Gehäuseteil 22 dient.

Das zweite Modul 20 umfasst ein zweites Gehäuseteil 32 mit einer zweiten Öffnung 34, eine hohle Abtriebswelle 36 und ein außenverzahntes Abtriebskegelzahnrad 38, wobei Abtriebswelle 36 und Abtriebskegelzahnrad 38 einteilig miteinander ausgebildet sind. Abtriebswelle 36 und Abtriebskegelzahnrad 38 sind drehbar um eine zweite Drehachse 40 in dem zweiten Gehäuseteil 32 gehalten. Durch die Kombination von ineinandergreifenden innen- und außenverzahnten Kegelrädern 39,41 wird eine große Profilüberdeckung erzielt, d.h. es sind gleichzeitig immer mehr Zahnräder als beispielsweise bei einer Stirnradverzahnung in Eingriff. Auf diese Weise können im Vergleich zu einer Stirnradverzahnung größere Kräfte bei gleicher Zahngröße übertragen werden. Das zweite Gehäuseteil 32 ist über Befestigungsstifte 42 mit dem ersten Gehäuseteil 22 derart verbunden, dass sich das Abtriebszahnrad 38 zumindest teilweise durch die erste Öffnung 24 des ersten Gehäuseteils 22 sowie durch die zweite Öffnung 34 des zweiten Gehäuseteils 32 erstreckt und mit dem Antriebskegelzahnrad 28 in Eingriff ist. Dabei schneiden sich die erste Drehachse 30 der Antriebswelle 26 und die zweite Drehachse 40 der Abtriebswelle 36 unter einem Winkel α, nachfolgend als Höhenwinkel bezeichnet.

Das erste Gehäuseteil 22, die Antriebswelle 26 sowie das Antriebskegelzahnrad 28 und das zweite Gehäuseteil 32, die Abtriebswelle 36 sowie das Abtriebskegelzahnrad 38 weisen Kunststoffmaterial auf, wobei es sich bei dem Material des ersten Gehäuseteils 22 um Polycarbonat (PC) und Acrylnitril-Butadien-Styrol (ABS), bei der Antriebswelle 26 sowie dem Antriebskegelzahnrad 28 um Polyoxymethylen (POM), beim zweiten Gehäuseteil 32 um Polyoxymethylen (POM) und bei der Abtriebswelle 36 sowie bei dem Abtriebskegelzahnrad 38 um Polyamid 6 (PA6) handelt. Diese Werkstoffkombination schafft sehr gut aufeinander abgestimmte Reibpartner an den Berührungspunkten von Antriebswelle 26/erster Gehäuseteil 22, Antriebskegelzahnrad 28/Abtriebskegelzahnrad 38 und Abtriebswelle 36/zweiter Gehäuseteil 32, wodurch ein schmiermittelloses Getriebe erzeugt wird.

Das erste Gehäuseteil 22 ist über Schraubverbindungen 44 (wobei es sich ebenso um Steckverbindungen, Stiftverbindungen o.dgl. handeln kann) an einem Armaturenbrett 45 befestigt. Das Armaturenbrett 45 umfasst eine kreisrunde Durchgangsöffnung 46, durch die sich der Drehzapfen 11 des Drehknopfes 12 erstreckt, wobei der Drehzapfen 11 an einem Ende an bzw. in der hohlen Antriebswelle 26 durch nicht dargestellte Mittel drehsicher fixiert ist. Durch Drehen des Drehknopfes 12 wird die Drehbewegung des Drehknopfes 12 über den Drehzapfen 11, die Antriebswelle 26, das Antriebskegelzahnrad 28 und das Abtriebskegelzahnrad 38 auf die Abtriebswelle 36 übertragen. An bzw. in der hohlen Abtriebswelle 36 kann eine flexible oder starre Welle 48 (nur angedeutet) angeordnet sein, welche die Drehbewegung an eine Luftverteilerklappe eines Fahrzeugheizsystems weiterleitet.

Um die Abtriebsrichtung der in Fig. 2 dargestellten Fahrzeugheizungsbedieneinheit 10 beispielsweise an Anforderungen eines anderen Fahrzeugtyps anzupassen, muss lediglich das zweite Modul 20 ausgetauscht werden, während das erste Modul 18 und folglich das erste Gehäuseteil 22 sowie die Antriebswelle 26 und das Antriebskegelzahnrad 28 unverändert bleiben. Dies ist insbesondere dahingehend von Vorteil, dass aufgrund des Einsatzes von Gleichteilen für das erste Modul 18 bei allen Fahrzeugtypen die Produktionskosten für das erste Modul 18 erheblich gesenkt werden können. Da die Fahrzeugheizungsbedieneinheit 10 über das erste Gehäuseteil 22 an dem Armaturenbrett 45 befestigt ist, kann ferner diese Befestigung bei allen Fahrzeugtypen beibehalten werden.

Das zweite Modul 20 hingegen wird durch ein zweites Modul mit veränderter Abtriebsrichtung und entsprechend geändertem zweiten Gehäuseteil 20 und/oder mit verändertem Abtriebskegelzahnrad 38 ersetzt. Zur Änderung des Höhenwinkels α werden sowohl das zweite Gehäuseteil 32 als auch das Abtriebszahnrad 38 des zweiten Moduls 20 ausgetauscht. Ferner ist es möglich, das zweite Modul 20 um die erste Drehachse 30 des Antriebszahnrades 28 um einen bestimmten Seitenwinkel β verdreht anzuordnen, wie es durch den Pfeil B in Fig. 2 angedeutet ist. Der Seitenwinkel β, um den das zweite Modul 20 um die erste Drehachse 30 gedreht werden kann, ist im wesentlichen von der Ausbildung der Öffnung 24 des ersten Gehäuseteils 22 des ersten Moduls 18 abhängig. Wenn die erste Öffnung 24 das Antriebskegelzahnrad 28 nur teilweise freilegt, wie in Fig. 2 gezeigt, so kann das zweite Modul 20 nur soweit gedreht werden, dass das Abtriebskegelzahnrad 38 noch durch die erste Öffnung 24 greifen kann. Legt die erste Öffnung 24 hingegen das gesamte Antriebskegelzahnrad 28 frei (nicht gezeigt), ist der Winkel, um den das zweite Modul 20 um die erste Drehachse 30 gedreht angeordnet werden kann, in keiner Weise beschränkt.

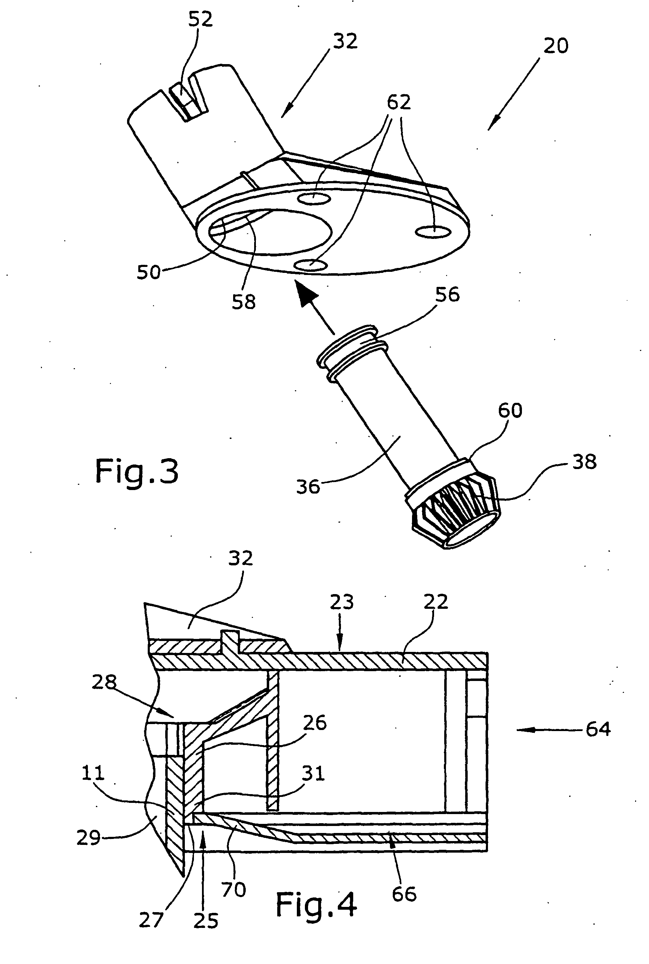

Unter Bezugnahme auf Fig. 3 wird im folgenden der Aufbau des in Fig. 2 dargestellten zweiten Moduls 20 genauer beschrieben. Wie bereits zuvor erwähnt, ist die Abtriebswelle 36, die in dieser Ausführungsform einteilig mit dem Abtriebszahnrad 38 ausgebildet ist, in dem zweiten Gehäuseteil 32 drehbar gehalten. Dazu umfasst das zweite Gehäuseteil 32 eine rohrförmige Durchgangsöffnung 50, in welche die Abtriebswelle 36 einsetzbar ist. Einteilig mit dem zweiten Gehäuseteil 32 ist ein elastischer, stegförmiger Rastvorsprung 52 ausgebildet, der sich in die Durchgangsöffnung 50 erstreckt. Die Abtriebswelle 36 umfasst an demjenigen Ende, das dem Abtriebskegelzahnrad 38 gegenüberliegt, einen Einschnappbereich, der in der dargestellten Ausführungsform des zweiten Moduls 20 durch eine sich ringförmig um die Abtriebswelle 36 erstreckende Umfangsnut 56 begrenzt ist. Wenn die Abtriebswelle 36 in die rohrförmige Durchgangsöffnung 50 des zweiten Gehäuseteils 32 eingesetzt wird, so taucht der sich in die Durchgangsöffnung 50 erstreckende elastische, stegförmige Rastvorsprung 52 schnappend in die Umfangsnut 54 der Abtriebswelle 36 ein, so dass die Abtriebswelle 36 in der Durchgangsöffnung 50 gehalten ist. Ferner umfasst das zweite Gehäuseteil 32 eine radiale, sich ringförmig um die Durchgangsöffnung 50 erstreckende Anschlagfläche 58, gegen die sich bei eingesetzter Abtriebswelle 36 ein nahe des Abtriebskegelzahnrades 38 und einteilig mit der Abtriebswelle 36 ausgebildeter ringförmiger Absatz 60 stützt. Somit ist die Abtriebswelle 36 in der rohrförmigen Durchgangsöffnung 50 fixiert, wobei der ringförmige Absatz 60 der Abtriebswelle 36 während einer Drehung der Abtriebswelle 36 um ihre Drehachse 40 (siehe Fig. 2) auf der Anschlagfläche 58 des zweiten Gehäuseteils 32 gleiten kann. Zur Befestigung des zweiten Gehäuseteils 32 an dem ersten Gehäuseteil 22 des ersten Moduls 18 sind in dem zweiten Gehäuseteil 32 Durchgangslöcher 62 vorgesehen, durch die sich die in Fig. 2 dargestellten Befestigungsstifte 42 erstrecken. Die Befestigungsstifte 42 können zum Fixieren des zweiten Gehäuseteils 32 an dem ersten Gehäuseteil 22 beispielsweise unter Druck (und unter Einfluss von Wärme) mit den beiden Gehäuseteilen 22, 32 verpresst werden.

An dieser Stelle sei darauf hingewiesen, dass die Befestigungsstifte 42 in Kombination mit den Durchgangslöchern 62 nur eine mögliche Befestigungsalternative darstellen. Um die Position des zweiten Gehäuseteils 32 hinsichtlich der ersten Drehachse 30 (Fig. 2) beliebig verändern zu können, wie es bereits zuvor beschrieben wurde, ist anstelle der in dem zweiten Gehäuseteil 32 vorgesehen Durchgangslöcher 62 auch ein sich zumindest teilweise ringförmig erstreckender Schlitz denkbar, durch den sich beispielsweise die Befestigungsstifte 42 erstrecken, wobei die Position des zweiten Gehäuseteils 32 hinsichtlich des ersten Gehäuseteils 22 nach Einsetzen der Befestigungsstifte 42 durch den sich ringförmig erstreckenden Schlitz mit geeigneten Mitteln fixiert werden muss.

Fig. 4 ist eine teilweise gebrochene Querschnittsansicht entlang der Linie IV-IV in Fig. 2 und zeigt das in dem ersten Gehäuseteil 22 angeordnete Antriebskegelzahnrad 28. Das erste Gehäuseteil 22 weist eine Öffnung 64 auf, durch die das Antriebskegelzahnrad 28 bei der Montage in das ersten Gehäuseteil 22 eingesetzt werden kann. Um die Positionierung des ersten Abschnitts 27 der Antriebswelle 26 in der Öffnung 29 des ersten Gehäuseteils 22 zu erleichtern, ist in dem Gehäuse eine Führungsnut 66 ausgebildet, die sich bis zur Öffnung 29 des ersten Gehäuseteils 22 erstreckt. Die Breite der Führungsnut 66 ist etwas größer als der Außendurchmesser des ersten Abschnitts 27 der Antriebswelle 26 ist, so dass der erste Abschnitt 27 der Antriebswelle in der Führungsnut führbar ist. Während der Montage wird das Antriebskegelzahnrad 28 durch die Öffnung 64 in die Führungsnut 66 eingelegt. Wenn nun das Antriebskegelzahnrad 28 weiter der Führungsnut 66 folgend über die Schräge 70 in Richtung der Öffnung 29 gedrückt wird, biegen sich die Oberseite 23 und/oder die Unterseite 25 des ersten Gehäuseteils 22 unter dem durch die Stirnflächen des Antriebskegelzahnrads 28 erzeugtem Druck auf, so dass der erste Abschnitt 27 der Antriebswelle 26 in die Öffnung 29 gleiten kann. Sobald der erste Abschnitt 27 in die Öffnung 29 eingesetzt ist, wird über die Stirnfläche des Antriebskegelzahnrads 28 kein Druck mehr auf die Ober- und/oder Unterseite des ersten Gehäuseteils 22 ausgeübt, so dass die Ober- und/oder Unterseite in ihre ursprüngliche Stellung zurückkehren. Auf diese Weise ist das Antriebskegelzahnrad 28 sicher in der Öffnung 29 und zwischen Ober- und Unterseite des ersten Gehäuseteils 22 sowohl axial als auch radial gehalten.

## Patentansprüche

1. Bausatz zur Herstellung einer Fahrzeugheizungsbedieneinheit mit einer Antriebs- (26) und einer Abtriebswelle (36), wobei der Bausatz versehen ist mit
- einem ersten Modul (18), das ein erstes Gehäuseteil (22) und ein Antriebszahnrad (28) mit einer drehbar an dem ersten Gehäuseteil (22) gelagerten Welle aufweist, welche die Antriebswelle (26) bildet, wobei im ersten Gehäuseteil (22) eine erste Öffnung (24) vorgesehen ist, innerhalb derer das Antriebszahnrad (28) zumindest teilweise frei liegt, und
- mehreren zweiten Modulen (20), die jeweils ein zweites Gehäuseteil (32) und ein Abtriebszahnrad (38) mit einer drehbar in dem zweiten Gehäuseteil (32) gelagerten Welle aufweisen, welche die Abtriebswelle (36) bildet, wobei in dem zweiten Gehäuseteil (32) eine zweite Öffnung (34) vorgesehen ist, innerhalb derer das Abtriebszahnrad (38) zumindest teilweise freiliegt,
- wobei sich die zweiten Module (20) hinsichtlich der Ausbildung des Abtriebszahnrades (38) und/oder hinsichtlich der Ausrichtung der Abtriebswelle (36) und der Ausbildung des zweiten Gehäuseteils (32) unterscheiden, und
- wobei jedes der zweiten Module (20) mit dem ersten Modul (18) zur Bildung der Fahrzeugheizungsbedieneinheit mit unterschiedlicher Ausrichtung der Abtriebswelle (36) zur Antriebswelle (26) hinsichtlich des Höhenwinkels, den die Antriebswelle (26) mit der Abtriebswelle (36) bildet, und/oder hinsichtlich des Seitenwinkels, um den die Abtriebswelle (36) gegenüber der Antriebswelle (26) um diese verdreht ist, zusammensetzbar ist.

2. Bausatz nach Anspruch 1, **dadurch gekennzeichnet, dass** das erste (22) und jedes der zweiten Gehäuseteile (32), die Antriebswelle (26) und jede der Abtriebswellen (36) und das Antriebszahnrad (28) sowie jedes der Abtriebszahnräder (38) Kunststoffmaterial aufweisen.

3. Bausatz nach Anspruch 2, **dadurch gekennzeichnet, dass** insgesamt wenigstens zweiunterschiedliche Kunststoffmaterialien vorgesehen sind.

4. Bausatz nach Anspruch 3, **dadurch gekennzeichnet, dass** die wenigstens zwei Kunststoffmaterialien an den Berührungspunkten von Antriebswelle (26) und erstem Gehäuseteil (22), Antriebszahnrad (28) und Abtriebszahnrad (38) sowie Abtriebswelle (36) und zweitem Gehäuseteil (32) zur Ausbildung von schmiermittellosen Lagerungen jeweils reibungsarm miteinander kombinierbar sind.

5. Bausatz nach Anspruch 3 oder 4, **dadurch gekennzeichnet, dass** es sich bei den Kunststoffmaterialien um Acrylnitril-Butadien-Styrol (ABS) und/oder Polycarbonat (PC) und/oder Polyamid und/oder Polyoxymethylen (POM) handelt.

6. Bausatz nach einem der vorhergehenden Ansprüche, **dadurch gekennzeichnet, dass** Abtriebswelle (36) und das Abtriebszahnrad (38) einteilig ausgebildet sind.

7. Bausatz nach einem der vorhergehenden Ansprüche, **dadurch gekennzeichnet, dass** die Antriebswelle (26) zur Aufnahme bzw. Befestigung eines Betätigungselementes (12) vorgesehen ist.

8. Bausatz nach einem der vorhergehenden Ansprüche, **dadurch gekennzeichnet, dass** die Abtriebswelle (36) zur Aufnahme bzw. Befestigung einer flexiblen oder starren Welle vorgesehen ist.

9. Bausatz nach einem der vorhergehenden Ansprüche, **dadurch gekennzeichnet, dass** das Antriebszahnrad (28) ein Kegelzahnrad mit einer Innenverzahnung und das Abtriebszahnrad (38) ein Kegelzahnrad mit einer Außenverzahnung ist.

10. Bausatz nach einem der vorhergehenden Ansprüche, **dadurch gekennzeichnet, dass** zur axialen Sicherung der Antriebswelle (26) im ersten Gehäuseteil (22) und/oder der Abtriebswelle (36) im zweiten Gehäuseteil (32) jeweils eine Rastverbindung vorgesehen ist.

11. Bausatz nach Anspruch 10, **dadurch gekennzeichnet, dass** es sich bei den Verbindungen um eine Kombination aus einer Umfangsnut (56) an den zweiten Gehäuseteilen oder an der Welle und einem Vorsprung (52) an der Welle oder an dem zweiten Gehäuseteil handelt.

12. Bausatz nach Anspruch 11, **dadurch gekennzeichnet, dass** der Vorsprung (52) elastisch ausgebildet ist und in die Umfangsnut (56) eintaucht oder unter diese greift.

13. Bausatz nach einem der Ansprüche 1 bis 12, **dadurch gekennzeichnet, dass** innerhalb der ersten Öffnung (24) die Verzahnung des Antriebszahnrades (28) zumindest teilweise freigelegt ist.

14. Bausatz nach Anspruch 13, **dadurch gekennzeichnet, dass** mehrere erste Module (18) vorgesehen sind, die sich hinsichtlich der Position und/oder der Größe ihrer ersten Öffnung (24) unterscheiden.

15. Bausatz nach einem der Ansprüche 1 bis 12, **dadurch gekennzeichnet, dass** innerhalb der ersten Öffnung (24) die Verzahnung des Antriebszahnrades (28) vollständig freigelegt ist.

## Claims

1. A modular kit for manufacturing a vehicle heating control unit, comprising a driving (26) and a driven shaft (36), wherein the modular kit is provided with
- a first module (18) comprising a first housing portion (22) and a driving gearwheel (28) having a shaft rotatably supported at the first housing portion (22), which shaft defines the driving shaft (26), wherein in the first housing portion (22) a first opening (24) is provided in which the driving gearwheel (28) is at least partly exposed, and
- a plurality of second modules (20), each comprising a second housing portion (32) and a driven gearwheel (38) having a shaft rotatably supported in the second housing portion (32), which shaft defines the driven shaft (36), wherein in the second housing portion (32) a second opening (34) is provided in which the driven gearwheel (38) is at least partly exposed,
- wherein the second modules (20) differ from each other with regard to the configuration of the driven gearwheel (38) and/or with regard to the orientation of the driven shaft (36) and the configuration of the second housing portion (32), and
- wherein each second module (20) is capable of being assembled with the first module (18) for defining a vehicle heating control unit with different orientation of the driven shaft (36) relative to the driving shaft (26) with regard to the elevation angle defined by the driving shaft (26) and the driven shaft (36), and/or with regard to the azimuth angle by which the driven shaft (36) is displaced relative to the driving shaft (26) about the latter.

2. The modular kit according to claim 1, **characterized in that** the first (22) and each second housing portion (32), the driving shaft (26) and each driven shaft (36), and the driving gearwheel (28) as well as each driven gearwheel (38) comprise plastic material.

3. The modular kit according to claim 2, **characterized in that** a total of at least two different plastic materials are provided.

4. The modular kit according to claim 3, **characterized in that** the at least two plastic materials are low-frictionally combinable at the respective contact points of drive shaft (26) and first housing portion (22), driving gearwheel (28) and driven gearwheel (38), as well as driven shaft (36) and second housing portion (32) for the purpose of defining lubricant-free bearings.

5. The modular kit according to claim 3 or 4, **characterized in that** the plastic materials are acrylonitrile butadiene styrene (ABS) and/or polycarbonate (PC) and/or polyamide and/or polyoxymethylene (POM).

6. The modular kit according to any one of the preceding claims, **characterized in that** the driven shaft (36) and the driven gearwheel (38) are of one-piece configuration

7. The modular kit according to any one of the preceding claims, **characterized in that** the driving shaft (26) is provided for accommodating and/or fastening an actuating element (12).

8. The modular kit according to any one of the preceding claims, **characterized in that** the driven shaft (36) is provided for accommodating and/or fastening a flexible or rigid shaft.

9. The modular kit according to any one of the preceding claims, **characterized in that** the driving gearwheel (28) is a bevel gearwheel having an internal toothing, and the driven gearwheel (38) is a bevel gearwheel having an external toothing.

10. The modular kit according to any one of the preceding claims, **characterized in that** a respective locking connection is provided for axially securing the driving shaft (26) in the first housing portion (22) and/or the driven shaft (36) in the second housing portion (32).

11. The modular kit according to claim 10, **characterized in that** the connections are a combination of a circumferential groove (56) at the second housing portions or at the shaft, and a projection (52) at the shaft or at the second housing portion.

12. The modular kit according to claim 11, **characterized in that** the projection (52) is of elastic configuration and engages in the circumferential groove (56) or grips under said groove.

13. The modular kit according to any one of claims 1 to 12, **characterized in that** in the first opening (24) the toothing of the driving gearwheel (28) is at least partly exposed.

14. The modular kit according to claim 13, **characterized in that** a plurality of first modules (18) are provided which differ from each other with regard to the position and/or the size of their first opening (24).

15. The modular kit according to any one of claims 1 to 12, **characterized in that** in the first opening (24) the toothing of the driving gearwheel (28) is completely exposed.

## Revendications

1. Jeu de pièces détachées pour la fabrication d'une unité de commande d'un chauffage de véhicule présentant un arbre menant (26) et un arbre mené (36), le jeu de pièces détachées comportant
- un premier module (18), qui comprend un premier élément de carter (22) et une roue dentée menante (28) avec un arbre monté à rotation sur le premier élément de carter (22), lequel arbre forme l'arbre menant (26), une première ouverture (24) étant alors prévue dans le premier élément de carter (22), première ouverture à l'intérieur de laquelle la roue dentée menante (28) se trouve être, au moins partiellement, à découvert, et
- plusieurs seconds modules (20), qui comprennent chacun un second élément de carter (32) et une roue dentée menée (38) avec un arbre monté à rotation dans le second élément de carter (32), lequel arbre forme l'arbre mené (36), une seconde ouverture (34) étant alors prévue dans le second élément de carter (32), seconde ouverture à l'intérieur de laquelle la roue dentée menée (38) se trouve être, au moins partiellement, à découvert,
- les seconds modules (20) se différenciant en ce qui concerne la réalisation de la roue dentée menée (38) et/ou en ce qui concerne l'orientation de l'arbre mené (36) et la réalisation du second élément de carter (32), et
- chacun des seconds modules (20) pouvant être assemblé avec le premier module (18) pour former l'unité d'un chauffage de commande de véhicule, avec une orientation différente de l'arbre mené (36) vis-à-vis de l'arbre menant (26) relativement à l'angle d'élévation, que l'arbre menant (26) forme avec l'arbre mené (36), et/ou relativement à l'angle azimutal, duquel l'arbre mené (36) est décalé en rotation par rapport à l'arbre menant (26), autour de ce dernier.

2. Jeu de pièces détachées selon la revendication 1, **caractérisé en ce que** le premier élément de carter (22) et chacun des seconds éléments de carter (32), l'arbre menant (26) et chacun des arbres menés (36) et la roue dentée menante (28) ainsi que chacune des roues dentées menées (38), comprennent de la matière plastique.

3. Jeu de pièces détachées selon la revendication 2, **caractérisé en ce qu'**au total, au moins deux matières plastiques différentes sont prévues.

4. Jeu de pièces détachées selon la revendication 3, **caractérisé en ce que** les deux, au moins, matières plastiques peuvent être combinées entre elles, chaque fois avec peu de frottement, aux points de contact de l'arbre menant (26) et du premier élément de carter (22), de la roue dentée menante (28) et de la roue dentée menée (38) ainsi que de l'arbre mené (36) et du second élément de carter (32), afin de constituer des paliers autolubrifiants.

5. Jeu de pièces détachées selon la revendication 3 ou 4, **caractérisé en ce que** les matières plastiques dont il s'agit, sont l'acrylonitrile-butadiène-styrène (ABS) et/ou du polycarbonate (PC) et/ou du polyamide et/ou le polyoxyméthylène (POM).

6. Jeu de pièces détachées selon l'une des revendications précédentes, **caractérisé en ce que** l'arbre mené (36) et la roue dentée menée (3 8) sont réalisés en une seule pièce.

7. Jeu de pièces détachées selon l'une des revendications précédentes, **caractérisé en ce que** l'arbre menant (26) est prévu pour la réception et la fixation d'un organe d'actionnement (12).

8. Jeu de pièces détachées selon l'une des revendications précédentes, **caractérisé en ce que** l'arbre mené (36) est prévu pour la réception et la fixation d'un arbre flexible ou rigide.

9. Jeu de pièces détachées selon l'une des revendications précédentes, **caractérisé en ce que** la roue dentée menante (28) est une roue dentée conique comportant une denture intérieure et la roue dentée menée (38) est une roue dentée conique comportant une denture extérieure.

10. Jeu de pièces détachées selon l'une des revendications précédentes, **caractérisé en ce que** pour l'immobilisation de l'arbre menant (26) en direction axiale dans le premier élément de carter (22) et/ou de l'arbre mené (36) dans le second élément de carter (32), il est respectivement prévu une jonction par encliquetage.

11. Jeu de pièces détachées selon la revendication 10, **caractérisé en ce que** les jonctions dont il s'agit, consistent en une combinaison d'une rainure circonférentielle (56) sur les seconds éléments de carter ou sur l'arbre et d'une saillie (52) sur l'arbre ou sur le second élément de carter.

12. Jeu de pièces détachées selon la revendication 11, **caractérisé en ce que** la saillie (52) est dotée d'une élasticité et pénètre dans la rainure circonférentielle (56) ou s'engage sous celle-ci.

13. Jeu de pièces détachées selon l'une des revendications 1 à 12, **caractérisé en ce que** la denture de la roue dentée menante (28) est dégagée, au moins partiellement, à l'intérieur de la première ouverture (24).

14. Jeu de pièces détachées selon la revendication 13, **caractérisé en ce qu'**il est prévu plusieurs premiers modules (18), qui se différencient en ce qui concerne le positionnement et/ou la taille de leur première ouverture (24).

15. Jeu de pièces détachées selon l'une des revendications 1 à 12, **caractérisé en ce que** la denture de la roue dentée menante (28) est complètement dégagée à l'intérieur de la première ouverture (24).
